# FASCICULE DE BREVET EUROPEEN

(11) **EP 2 354 484 B1**
(45) Date de publication et mention de la délivrance du brevet: **05.06.2013**
(21) Numéro de dépôt: 10194827.1
(22) Date de dépôt: 14.12.2010
(51) Int. Cl.: F01N 3/021, F01N 11/00, F02D 41/22, F02D 41/14

(54) **Procédé de diagnostic fonctionnel d'un capteur de suie**
VERFAHREN ZUR FUNKTIONSDIAGNOSE EINES RUSSSENSORS
METHOD FOR OPERATIONS DIAGNOSIS OF A SOOT SENSOR

(30) Priorité: 04.01.2010 FR 1050006
(43) Date de publication de la demande: 10.08.2011
(73) Titulaire: Peugeot Citroën Automobiles SA, 78140 Vélizy-Villacoublay (FR)
(72) Inventeur: Guerin, Stephane, 92250 La Garenne Colombes (FR); Etcheverry, Céline, 92330 Sceaux (FR); Colas, Hervé, 95130 Franconville (FR)

(56) Documents cités:
- EP-A1- 1 624 166
- DE-A1-102006 057 528
- US-A1- 2006 137 436
- US-A1- 2008 148 830

## Description

L'invention porte sur le domaine du diagnostic des moyens de dépollution des gaz d'échappement d'un moteur à combustion, et plus particulièrement d'un moteur à combustion dont la ligne d'échappement présente un capteur de particules visant à caractériser la quantité de particules de suie présente dans les gaz d'échappement.

Il est connu de disposer un capteur de particules dans la ligne d'échappement d'un moteur pour caractériser la quantité de particules de suie présente dans les gaz d'échappement. Un tel dispositif peut être mis en oeuvre en laboratoire, par exemple pour mesurer les émissions de particules d'un moteur sur divers points de fonctionnement, ou dans le cadre d'un véhicule, pour s'assurer du bon fonctionnement ou la défaillance d'un moyen de dépollution tel qu'un filtre à particules.

Dans une application automobile, un tel dispositif peut par exemple permettre de répondre aux futures normes EURO 6 en matière d'EOBD (pour « European On Board Diagnostic » ou Diagnostic embarqué Européen) qui impose l'allumage d'un voyant et le stockage d'un défaut en cas de dépassement des émissions de particules au-delà d'un seuil fixe déterminé. Le capteur de particules est alors placé en aval des dispositifs de dépollution, dont le filtre à particules équipant la ligne d'échappement.

Cependant, il est également important de pouvoir diagnostiquer le bon fonctionnement d'un tel capteur. Il est classiquement connu des moyens de réaliser le diagnostic électrique de tout capteur, c'est-à-dire des moyens de s'assurer du branchement effectif d'un capteur. En général, on détecte le débranchement d'un capteur en constatant un niveau de courant consommé plus faible qu'un seuil déterminé. Un tel diagnostic, adapté au cas particulier de la connectique des capteurs de particules est par exemple connu par le document US 2008 0 148 830 ou par la demande de brevet US2009090622.

Un tel diagnostic électrique du capteur n'est néanmoins pas suffisant pour garantir que la mesure effectuée par le capteur est correcte, notamment dans le cas où de manipulations visant à fausser intentionnellement la mesure effectuée. En effet, même si cette situation peut paraitre étonnante au premier abord, l'utilisateur du moteur peut chercher à tromper le capteur, en le bouchant mal intentionnellement (c'est-à-dire en confinant la partie active du capteur) ou en le déplaçant. L'élément sensible du capteur n'est alors plus en contact avec les gaz d'échappement. Il peut aussi avoir été volontairement placé en dehors du flux des gaz d'échappement, et remplacé par exemple par une vis dans la ligne d'échappement, tout en restant branché. Dans les ces deux cas, le diagnostic électrique ne permet pas de déceler la défaillance, bien que le capteur soit neutralisé, de sorte qu'il n'est plus en mesure de détecter une éventuelle émission de particules.

Le principe généralement adopté pour réaliser un diagnostic fonctionnel d'un capteur est de vérifier que le capteur mesure bien la grandeur pour laquelle il est conçu, dans certaines conditions prédéterminées, durant lesquelles cette grandeur est approximativement connue par le contrôle moteur. Dans le cas d'un capteur de suies, il y a un tel principe est inopérant. En effet, un filtre à particules positionné en amont du capteur de suies réalise toujours parfaitement son travail de filtration, et il est donc impossible de créer une dérive volontaire des émissions de particules et d'en constater un effet sur la mesure réalisée par le capteur. Un diagnostic fonctionnel tel que classiquement envisagé ne peut donc pas être mis en oeuvre pour ce type de capteur.

Or, le respect de la règlementation à venir impose de réaliser un diagnostic des éléments participant au diagnostic EOBD. Il faut ainsi pouvoir détecter si le capteur n'est pas opérationnel. Ceci précisément afin de se prémunir contre les interventions sur le capteur visant à empêcher son fonctionnement. Le seul diagnostic électrique du capteur n'est donc pas suffisant en soi.

Dans l'invention, on vise à développer un procédé de diagnostic d'un capteur de suie, permettant de s'assurer de son bon fonctionnement effectif.

Dans l'invention, on exploite pour cela le fait que la filtration d'un filtre à particules à accumulation de suie et régénération périodique est d'autant meilleure que le filtre est rempli de particules. Dans une application automobile, même si la filtration offerte par les technologies de filtres couramment utilisés, comme des filtres monolithiques en carbure de silicium ou en cordiérite, est toujours d'une grande efficacité, des essais menés par l'inventeur ont montré, que la présence de suies dans le filtre participe aux performances de filtration.

Plus précisément, l'invention porte sur un procédé de diagnostic fonctionnel d'un capteur de suie équipant une ligne d'échappement d'un moteur à combustion comportant un filtre à particules en amont dudit capteur, les suies accumulées dans le filtre étant périodiquement oxydées lors de phases de régénérations, **caractérisé en ce qu**'on compare le niveau instantané de particules mesuré par le capteur de suie à un niveau de référence lorsque le filtre est dans un état favorable au diagnostic du capteur, et, si le niveau instantané d'émission mesuré n'est pas supérieur d'un seuil prédéterminé au niveau de référence, on conclut à une anomalie du capteur de suie. Le filtre contient toujours une quantité plus ou moins importante de suie, sauf dans 2 cas : quand il est neuf, et durant une régénération ou dans les instants suivant une telle régénération. Ainsi, constater une légère surémission de particules dans ces phases, qui sont dites favorables au diagnostic, témoigne d'un fonctionnement effectif du capteur, et, a contrario, ne pas détecter de surémission témoigne d'une défaillance du capteur, qui peut par exemple avoir été placé hors du flux des gaz d'échappement pour en fausser la mesure.

Dans une variante, on conclut à un dysfonctionnement du capteur si plusieurs anomalies successives sont détectées. Il est ainsi possible de fiabiliser la détection d'un dysfonctionnement du capteur de suie. En effet, la détection se faisant sur la base de surémissions très faibles (de l'ordre de 1mg/km de suie pour une application automobile Diesel), il peut être prudent de fiabiliser le procédé en conditionnant la détection d'un dysfonctionnement à la détection de plusieurs anomalies successives.

Dans une variante le niveau de référence est un niveau nul. En effet, dans une application automobile classique, le niveau de filtration est tel qu'il n'y a pratiquement plus de particules à l'échappement en dehors des phases favorables au diagnostic. Fixer par défaut le niveau de référence à un niveau nul est donc une bonne approximation du niveau de particules moyen à l'échappement, en dehors des phases de régénération. Il suffira alors pour diagnostiquer une anomalie de constater l'absence de toute émission mesurable dans un état du filtre favorable au diagnostic.

Dans une autre variante, le niveau de référence est le niveau moyen à l'échappement en dehors des phases de régénération. Ce niveau moyen peut être estimé en fonction des caractéristiques du moteur et du filtre considérés (dont on connait les performances de filtration), ou encore être mesuré par le capteur (on prend ainsi en considération le niveau de sortie du capteur en dehors des phases d'état du filtre favorable aux diagnostic).

On considère le filtre dans un état favorable au diagnostic si une régénération est en cours . En effet, pendant la régénération du filtre, une très légère surémission de suie est constatée en aval de celui-ci.

On considère le filtre dans un état favorable au diagnostic si le filtre est faiblement chargé. En effet, plus le filtre est chargé, plus ses performances de filtration sont grandes. Un filtre très faiblement chargé filtrera légèrement moins qu'un filtre chargé, et une légère surémission de particules pourra être constatée à l'échappement, en aval du filtre.

Le filtre est dit faiblement chargé si son niveau de charge est inférieur à 5% de sa capacité maximale. Cette estimation peut être réalisée par le dispositif de contrôle moteur qui indique au superviseur du filtre à particules la quantité de suie émise à chaque tour moteur. Cette valeur correspond en particulier à une plage adéquate pour une application du procédé à un véhicule automobile. Selon l'application considérée, on peut rapporter cette charge maximale à un temps écoulé depuis la dernière régénération.

De préférence, le procédé met en jeu un capteur de suie d'une technologie du type à mesure de courant ionique, ou opto-acoustique. Ces technologies, en ce qu'elles permettent une mesure directe en temps réel du niveau de particules à l'échappement, sont particulièrement adaptées à la mise en oeuvre d'un procédé selon l'invention. En particulier, la technologie à mesure de courant ionique est, dans l'état actuel de la technologie, adaptée à une application embarquée sur véhicule, tandis que la technologie opto-acoustique est plutôt adaptée à l'application d'un procédé selon l'invention à un banc moteur.

De préférence, dans une application automobile d'un procédé selon l'invention, le seuil prédéterminé est compris en 0,5 mg/km et 2mg/km. C'est l'ordre de grandeur de la surémission constatée pendant ou immédiatement après une régénération d'un filtre à particule sur un véhicule automobile Diesel doté d'un filtre à particule monolithique à base de carbure de silicium.

L'invention porte également sur un véhicule automobile comportant un moteur à combustion dont la ligne d'échappement est dotée d'un filtre à particules et d'un capteur de suie, **caractérisé en ce que** le filtre à particules est doté d'un superviseur électronique mettant en jeu un procédé selon l'invention.

L'invention est décrite plus en détail ci-après et en référence aux figures représentant schématiquement le système dans son mode de réalisation préférentiel.

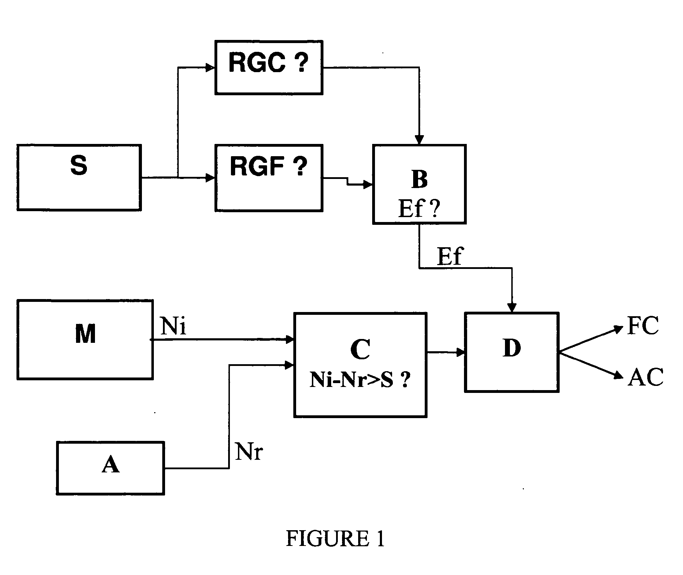

La figure 1 présente sous la forme d'un diagramme en blocs le synoptique d'un procédé conforme à un mode de réalisation de l'invention.

Dans une première étape A, on détermine un niveau de référence Nr de particules à l'échappement. Ce niveau peut correspondre au niveau de particules à l'échappement en dehors des phases de régénérations. Généralement, dans une application automobile, on pourra considérer un niveau nul, tant la quantité de particules à l'échappement est faible, et bien souvent à la limite du détectable notamment pour les technologies des capteurs embarqués. Selon les variantes de l'invention, ce niveau pourra être imposé (par exemple à un niveau nul, comme évoqué précédemment, ou à un niveau supposé du fait des caractéristiques du filtre et du moteur qu'il équipe) ou bien correspondre au niveau moyen de particules à l'échappement en dehors des phases de régénération du filtre à particules, et sera alors obtenu à l'aide de mesures moyennées, pour traduire le niveau de sortie du capteur en dehors des régénérations.

Dans une deuxième étape B, on détermine si le filtre est dans un état favorable au diagnostic Ef. Un tel état favorable au diagnostic Ef pourra correspondre, dans la variante de l'invention ici présenté, au fait qu'une régénération est en cours RGC ou au fait qu'une régénération est achevée depuis moins d'une durée prédéterminée RGF, ce qui traduit un état faiblement chargé du filtre à particules. Une telle information sera fournie par le superviseur S du filtre à particules. Le superviseur S pourra fournir cette information, par exemple sur la base d'instructions envoyées à un dispositif de contrôle commande du moteur pour ordonner la régénération du filtre à particules, ou sur la base de la détection de conditions de roulage provoquant nécessairement la régénération du filtre (roulage en forte pente) ou encore sur la base de mesures de pression réalisée communément autour du filtre à particules pour en traduire la charge en suie. Selon la variante de l'invention considérée, on pourra donc juger que le filtre est dans un état favorable au diagnostic si sa charge est inférieure à 5% de sa capacité maximale.

Dans une étape de mesure M, la quantité (niveau instantané Ni) de particules dans les gaz d'échappement est évaluée par un capteur de suie en aval du filtre à particules. La technologie employée pour la réalisation du capteur est sans importance dans l'invention, dès lors que ledit capteur est suffisamment précis pour réussir à discriminer la mesure faite lorsque le filtre est vide de suie, de la mesure faite avec un filtre plein. On peut notamment citer les technologies connues de capteur de suie suivantes :
- Technologie à mesure de courant ionique
- Technologie résistive
- Technologie opto-acoustique

La première technologie citée délivre notamment un signal qui est directement transcrit en mg/m3 de particules dans les gaz d'échappement. L'intégration de ce signal, corrigée du débit gazeux du moteur, peut donner à tout instant une représentation de la quantité de particules en sortie du filtre à particules. La comparaison de ce signal avec les émissions brutes connues du moteur, donne une efficacité instantanée de filtration.

Le capteur permet ainsi permet ainsi généralement de détecter une défaillance dans le filtre à particule, et de la caractériser.

La troisième catégorie de capteur génère un signal « tout ou rien » en fonction de la quantité de suies présentes sur le capteur. Lorsque le capteur est saturé de suies, son contrôleur interne génère une demande de régénération (du capteur). C'est l'intervalle entre deux régénérations du capteur qui va déterminer la quantité de suies déposée sur le capteur par unité de temps. La projection des émissions hors cycle sur le cycle est beaucoup moins aisée qu'avec les capteurs des technologies précédemment évoquées, et l'application d'une telle technologie à l'invention nécessite des adaptations du procédé (par exemple par agrégation de mesures sur plusieurs phases de régénération, etc.). Cette technologie ne sera préférentiellement pas employée pour l'application du procédé selon l'invention.

Ces trois premières technologies peuvent être aisément embarquées sur un véhicule automobile. Quant à la technologie opto-acoustique, très précise et présentant une bonne dynamique de mesure, est quant à elle plutôt destinée, dans l'état actuel de la technique, à la mise en oeuvre du procédé sur des applications fixes (par exemple à un banc de développement moteur). Dans cette technologie, le gaz d'échappement sur lequel porte la mesure de particules est irradié par un laser. Les particules en suspension dans le gaz absorbent cette énergie, et provoquent un échauffement local. Cet échauffement provoque une augmentation locale de la pression, qui se traduit par des ondes acoustiques de fréquences élevées (ultrasons), qui sont captées par des transducteurs adaptés. L'intensité des ultrasons est proportionnelle à la quantité de suies présente dans le gaz.

Dans une étape de comparaison C on compare le niveau instantané Ni de particules mesuré par le capteur de suies au niveau de référence Nr. Ce niveau de référence Nr peut être fixé à un niveau nul (ce qui peut notamment être le cas pour une application automobile dans laquelle la filtration des suies à l'échappement est quasiment parfaite), ou bien correspondre au niveau moyen de particules à l'échappement, en aval du filtre, en dehors des phases de régénération. En pratique, on soustrait le niveau de référence au niveau déterminé dans la première étape A au niveau mesuré dans l'étape de mesure M, et on le compare à un seuil prédéterminé. Si le niveau de référence est fixé par défaut à zéro (niveau nul), on compare simplement le niveau mesuré au seuil prédéterminé.

Dans une étape de diagnostic fonctionnel D, menée si le filtre est dans un état favorable au diagnostic, on conclut à une anomalie du capteur de suie AC si le niveau instantané Ni mesuré n'est pas supérieur du seuil prédéterminé S au niveau de référence Nr.

Eventuellement, de manière corolaire, si le niveau instantané Ni mesuré est au moins supérieur d'un seuil prédéterminé S au niveau de référence Nr, on conclut au fonctionnement effectif du capteur de suie FC.

Le procédé ainsi développé est applicable tant sur une application fixe (compresseur, groupe électrogène, moteur industriel, etc.) que sur une application automobile. Il peut également être appliqué à des applications en laboratoire, sur un banc de développement d'un moteur par exemple.

Dans une application automobile, la présente invention permet de s'assurer, au-delà de la seule validation du branchement électrique du capteur généralement réalisée, du fonctionnement effectif d'un capteur de suie dans une ligne d'échappement d'un moteur à combustion, en rendant par exemple impossible une désactivation du capteur EOBD de mesure des particules.

## Revendications

1. Procédé de diagnostic fonctionnel d'un capteur de suie équipant une ligne d'échappement d'un moteur à combustion comportant un filtre à particules en amont dudit capteur, les suies accumulées dans le filtre étant périodiquement oxydées lors de phases de régénérations, **caractérisé en ce qu'**on détermine si le filtre est dans un état favorable au diagnostic, à savoir qu'une régénération est en cours ou une régénération est achevée depuis moins d'une durée prédéterminée ou niveau de charge du filtre est inférieur à 5% de sa capacité maximale, on compare le niveau instantané (Ni) de particules mesuré par le capteur de suie à un niveau de référence (Nr), et, si le filtre est dans un état favorable et si le niveau instantané (Ni) d'émission mesuré n'est pas supérieur d'un seuil prédéterminé (S) au niveau de référence (Nr), on conclut à une anomalie du capteur de suie (AC).

2. Procédé selon la revendication 1, **caractérisé en ce qu'**on conclut à un dysfonctionnement du capteur si plusieurs anomalies (AC) successives sont détectées.

3. Procédé selon l'une quelconque des revendications précédentes, **caractérisé en ce que** le niveau de référence (Nr) est un niveau nul.

4. Procédé selon l'une quelconque des revendications précédentes, **caractérisé en ce que** le niveau de référence (Nr) est le niveau moyen à l'échappement en dehors des phases de régénération.

5. Procédé selon l'une quelconque des revendications précédentes, **caractérisé en ce qu'**il met en jeu un capteur de suie du type à mesure de courant ionique, ou opto-acoustique.

6. Procédé selon l'une quelconque des revendications précédentes appliqué à une automobile, **caractérisé en ce que** le seuil prédéterminé est compris en 0,5 mg/km et 2mg/km.

7. Véhicule automobile comportant un moteur à combustion dont la ligne d'échappement est dotée d'un filtre à particules et d'un capteur de suie, **caractérisé en ce que** le filtre à particules est doté d'un superviseur électronique mettant en jeu un procédé selon l'une quelconque des revendications précédentes.

## Patentansprüche

1. Verfahren zur Funktionsdiagnose eines Rußsensors, der eine Auspufflinie eines Verbrennungsmotors ausstattet, die ein Schwebstofffilter stromaufwärts des Sensors aufweist, wobei der in dem Filter angesammelte Ruß in regelmäßigen Abständen bei Regenerationsphasen oxidiert wird, **dadurch gekennzeichnet, dass** man bestimmt, ob das Filter in einem für die Diagnose günstigen Zustand ist, das heißt, dass eine Regeneration läuft oder eine Regeneration seit weniger als einer vorbestimmten Dauer abgeschlossen ist oder der Verschmutzungspegel des Filters kleiner ist als 5 % seiner maximalen Kapazität, dass man den Momentanpegel (Ni) der Schwebstoffe, der von dem Rußsensor gemessen wird, mit einem Bezugspegel (Nr) vergleicht, und, wenn das Filter in einem günstigen Zustand ist und wenn der gemessene Emissionsmomentanpegel (Ni) nicht größer ist als ein vorbestimmter Schwellenwert (S) auf dem Bezugspegel (Nr), man auf eine Anomalie des Rußsensors (AC) schließt.

2. Verfahren nach Anspruch 1, **dadurch gekennzeichnet, dass** man auf eine Funktionsstörung des Sensors schließt, wenn mehrere aufeinanderfolgende Anomalien (AC) erfasst werden.

3. Verfahren nach einem der vorhergehenden Ansprüche, **dadurch gekennzeichnet, dass** der Bezugspegel (Nr) ein Nullpegel ist.

4. Verfahren nach einem der vorhergehenden Ansprüche, **dadurch gekennzeichnet, dass** der Bezugspegel (Nr) der mittlere Pegel am Auspuff außerhalb der Regenerationsphasen ist.

5. Verfahren nach einem der vorhergehenden Ansprüche, **dadurch gekennzeichnet, dass** es einen Rußsensor des Typs mit Ionenstrommessung oder des opto-akustischen Typs umsetzt.

6. Verfahren nach einem der vorhergehenden Ansprüche, das an ein Kraftfahrzeug angewandt wird, **dadurch gekennzeichnet, dass** der vorbestimmte Schwellenwert zwischen 0,5 mg/km und 2 mg/km liegt.

7. Kraftfahrzeug, das einen Verbrennungsmotor aufweist, dessen Auspufflinie mit einem Schwebstofffilter und einem Rußsensor versehen ist, **dadurch gekennzeichnet, dass** das Schwebstofffilter mit einer elektronischen Überwachung versehen ist, die ein Verfahren nach einem der vorhergehenden Ansprüche einsetzt.

## Claims

1. A method of functional diagnosis of a soot sensor equipping an exhaust line of an internal combustion engine comprising a particle filter upstream of the said sensor, the accumulated soot in the filter being periodically oxidized during regeneration phases, **characterized in that** it is determined if the filter is in a favourable state for diagnosis, namely that a regeneration is taking place or a regeneration has been completed since less than a predetermined duration or the charge level of the filter is less than 5% of its maximum capacity, the instantaneous level (Ni) of particles measured by the soot sensor is compared with a reference level (Nr), and, if the filter is in a favourable state and if the measured instantaneous level (Ni) of emission is not greater with respect to a predetermined threshold (S) at the reference level (Nr), it is concluded that there is an anomaly of the soot sensor (AC).

2. The method according to Claim 1, **characterized in that** it is concluded that there is a malfunction of the sensor if several successive anomalies (AC) are detected.

3. The method according to any one of the preceding claims, **characterized in that** the reference level (Nr) is a zero level.

4. The method according to any one of the preceding claims, **characterized in that** the reference level (Nr) is the mean level with regard to the exhaust apart from the regeneration phases.

5. The method according to any one of the preceding claims, **characterized in that** it brings into use a soot sensor of the type with ionic or optoacoustic current measurement.

6. The method according to any one of the preceding claims applied to an automobile, **characterized in that** the predetermined threshold is comprised in 0.5 mg/km and 2 mg/km.

7. A motor vehicle comprising an internal combustion engine, the exhaust line of which is equipped with a particle filter and a soot sensor, **characterized in that** the particle filter is equipped with an electronic supervisor bringing into use a method according to any one of the preceding claims.
